# EUROPEAN PATENT APPLICATION

(11) **EP 2 942 940 A1**
(43) Date of publication of application: **11.11.2015**
(21) Application number: 14167089.3
(22) Date of filing: 06.05.2014
(51) Int. Cl.: H04N 5/232, H04N 5/345

(54) **Method and apparatus for defining the visible content of an image**

(71) Applicant: Nokia Technologies OY, 02610 Espoo (FI)
(72) Inventor: Rainisto, Roope, 00730 Helsinki (FI)
(74) Representative: Nokia Corporation

(57) **Abstract**

A method, apparatus, and computer program product are provided to define the visible content of an image obtained by an image capturing device in a manner that takes into account content of interest that is exterior to the visible content. In the context of a method, an image obtained by an image capturing device is analyzed. The analysis of the image includes analyzing at least peripheral content exterior to visible content presented by a view finder to identify content of interest within the peripheral content. The method may also include, following movement of the image capturing device in a first direction, receiving a subsequent image. The method may also include defining the visible content within the subsequent image based at least in part upon the content of interest identified within the peripheral content. As such, the visible content is not necessarily centered within the subsequent image.

## Description

### TECHNOLOGICAL FIELD

A method, apparatus and computer program product are provided in accordance with an example embodiment in order to capture and display images and, more particularly, to define the visible content of an image.

### BACKGROUND

The image presented by the view finder of a camera and, as a result, the image captured by the camera may be smaller than the field of view of the camera. For example, a camera may have a wide field of view, such as in an instance in which the camera includes an image sensor having many megapixels. Cameras having a large field of view may provide for digital zooming by permitting the image displayed by the view finder of the camera to be cropped, thereby displaying only a portion of the entire field of view.

While cropping of the field of view or otherwise causing the image presented by the view finder to be smaller than the field of view of the camera may be advantageous for digital zooming, the image presented by the view finder and, in turn, captured by the camera does not include the content that is within the field of view, but that is outside of the image. Thus, the image presented by the view finder and, in turn, captured by the camera may omit meaningful content that is within the field of view of the camera, but that is outside of the image.

### BRIEF SUMMARY

A method, apparatus and computer program product are provided in accordance with an example embodiment in order to define the visible content of an image obtained by an image capturing device so as to take into account content of interest that is exterior to the visible content. Thus, a method, apparatus and computer program product of an example embodiment may define the visible content within an image captured by an image capturing device based upon peripheral content within the image obtained by the image capture device, but exterior to the visible content of a prior image. Thus, the visible content may be defined so as to include more of the content of interest even though the visible content may no longer be centered within the image that has been obtained by the image capturing device with the visible content. Instead, the visible content presented by the view finder may be shifted relative to the image that has been obtained by the image capturing device so as to include more of the content of interest that otherwise would have been exterior to the visible content.

In an example embodiment, a method is provided that includes analyzing an image obtained by an image capturing device. The analysis of the image includes analyzing at least peripheral content exterior to visible content presented by a view finder to identify content of interest within the peripheral content. The method of this example embodiment also includes, following movement of the image capturing device in a first direction, receiving a subsequent image. The method may also include defining the visible content within the subsequent image based at least in part upon the content of interest identified within the peripheral content. As such, the visible content is not centered within the subsequent image.

The method of an example embodiment may define the visible content within the subsequent image by moving the visible content relative to the respective image in a disproportionate manner relative to movement from the image to the subsequent image attributable to movement of the image capturing device. In an instance in which the content of interest is positioned in the first direction relative to the visible content of the image, the method may move the visible content relative to the respective image in a disproportionate manner by moving the visible content relative to the respective image to a greater degree than the movement from the image to the subsequent image. Alternatively, in an instance in which the content of interest is positioned in a direction, opposite the first direction, relative to the visible content of the image, the method may move the visible content relative to the respective image in a disproportionate manner by moving the visible content relative to the respective image to a lesser degree than the movement from the image to the subsequent image.

The method of an example embodiment may define the visible content within the subsequent image by defining the visible content within the subsequent image such that the visible content includes more of the content of interest than would be included if the visible content were centered within the subsequent image. In an example embodiment, the method may employ optical image stabilization in an instance in which the content of interest is in a direction, opposite the first direction, relative to the visible content of the image so as to maintain the image. In this example embodiment, the method may also define the visible content within the subsequent image without optical image stabilization in an instance in which the content of interest is in the first direction, relative to the visible content of the image. The method of an example embodiment may also include redefining the visible content to be centered within another image in an instance in which content of interest has not been identified and in response to further movement of the image capturing device so as to capture the another image.

In another example embodiment, an apparatus is provided that includes means for analyzing an image obtained by an image capturing device. The means for analyzing the image may include means for analyzing at least peripheral content exterior to visible content presented by a view finder to identify content of interest within the peripheral content. The apparatus for this example embodiment may also include means, following movement of the image capturing device in the first direction, for receiving a subsequent image. The apparatus of this example embodiment may also include means for defining the visible content within the subsequent image based at least in part upon the content of interest identified within the peripheral content such that the visible content is not centered within the subsequent image.

The means for defining the visible content within the subsequent image may include means for moving the visible content relative to the respective image in a disproportionate manner relative to movement from the image to the subsequent image attributable to movement of the image capturing device. In an instance in which the content of interest is positioned in the first direction relative to the visible content of the image, the means for moving the visible content relative to the respective image in a disproportionate manner may include means for moving the visible content relative to the respective image to a greater degree than the movement from the image to the subsequent image. Alternatively, in an instance in which the content of interest is positioned in a direction, opposite the first direction, relative to the visible content of the image, the means for moving the visible content relative to the respective image in a disproportionate manner may include means for moving the visible content relative to the respective image to a lesser degree than the movement from the image to the subsequent image.

The means for defining the visible content within the subsequent image may include means for defining the visible content such that the visible content within the subsequent image includes more of the content of interest than would be included if the visible content were centered within the subsequent image. The apparatus of an example embodiment may also include means for employing optical image stabilization in an instance in which the content of interest is in a direction, opposite the first direction, relative to the visible content of the image so as to maintain the image. In this example embodiment, the means for defining the visible content within the subsequent image may be without optical image stabilization in an instance in which the content of interest is in the first direction, relative to the visible content of the image. The apparatus of an example embodiment may also include means for redefining the visible content to be centered within another image in an instance in which the content of interest has not been identified and in response to further movement of the image capturing device so as to capture the another image.

In a further example embodiment, an apparatus is provided that includes at least one processor and at least one memory storing computer program code in the at least one memory with the stored computer program code being configured, with the at least one processor, to cause the apparatus to at least analyze an image obtained by an image capturing device. In this regard, the at least one memory and stored computer program code may be configured, with the at least one processor, to cause the apparatus to analyze the image by analyzing at least peripheral content exterior to visible content presented by a view finder to identify content of interest within the peripheral content. The at least one memory and the stored computer program code are also configured, with the at least one processor, to cause the apparatus of this example embodiment to receive a subsequent image following movement of the image capturing device in the first direction. The at least one memory and stored computer program code are also configured, with the at least one processor, to cause the apparatus of this example embodiment to define the visible content within the subsequent image based at least in part upon the content of interest identified within the peripheral content such that the visible content is not centered within the subsequent image.

In yet another example embodiment, a computer program product is provided that includes at least one computer-readable storage medium having computer-executable program code instructions stored therein with the computer-executable program code instructions including program code instructions, when executed by at least one processor, to cause an image obtained by an image capturing device to be analyzed by analyzing at least peripheral content exterior to visible content presented by a view finder to identify content of interest within a peripheral content. The computer-executable program code instructions of this example embodiment also include program code instructions, when executed by the at least one processor, to cause a subsequent image to be received following movement of the image capturing device in the first direction. The computer-executable program code instructions of this example embodiment also include program code instructions, when executed by the at least one processor, to cause the visible content within the subsequent image to be defined based at least in part upon the content of interest identified within the peripheral content such that the visible content is not centered within the subsequent image.

### BRIEF DESCRIPTION OF THE DRAWINGS

Having thus described example embodiments of the invention in general terms, reference will not be made to the accompanying drawings, which are not necessarily drawn to scale, and wherein:
Figure 1 is a representation of an image obtained by an image capturing device that includes both visible content presented by a view finder and peripheral content exterior of the visible content;
Figure 2 is a block diagram of an apparatus that may be specifically configured in accordance with an example embodiment of the present invention;
Figure 3 is a flowchart of operations performed, such as by the apparatus of Figure 2, in accordance with an example embodiment of the present invention;
Figure 4 is a representation of the image of Figure 1 in which the content of interest has been identified;
Figure 5 is a representation of an image obtained by an image capturing device following movement of the image capturing device in which the visible content is at least partially based upon the content of interest that was identified in the prior image in accordance with an example embodiment of the present invention; and
Figure 6 is a flow chart of operations performed, such as by the apparatus of Figure 2, in accordance with an example embodiment of the present invention.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a non-transitory physical storage medium (for example, volatile or non-volatile memory device), can be differentiated from a "computer-readable transmission medium," which refers to an electromagnetic signal.

A method, apparatus and computer program product are provided in accordance with an example embodiment of the present invention in order to define the content that is to be visible within an image based at least in part upon content of interest within peripheral content of a prior image that is obtained by an image capturing device but that is not presented by a view finder. By defining the visible content based at least in part upon the content of interest and not by merely centering the visible content within the image obtained by an image capturing device, the resulting image may more likely include a greater percentage of the content of interest that lies within the image obtained by the image capturing device including the content of interest along the edges of the image. Thus, the resulting image presented by the view finder may be more informative and of greater interest to a user than an image of the same scene in which the visible content is merely centered within the image obtained by the image capturing device without regard to content of interest that appears within peripheral content of the image.

An image capturing device may obtain an image, such as based upon the image received by one or more image sensors of an image capturing device. The image capturing device may be embodied in various manners including as a camera; a video recorder; a mobile device, such as a smartphone, a personal digital assistant (PDA) or the like, that includes an image capturing device, a computing device, such as a tablet computer, a personal computer, a laptop computer or the like, that includes an image capturing device, or the like. Regardless of the manner in which the image capturing device is embodied, the image capturing device may include or otherwise be associated with a view finder upon which at least a portion of the image obtained by the image capturing device is presented. As such, a user may view the image presented by the view finder in order to see the image that would currently be captured. However, the image obtained by the image capturing device, such as the image received by the image sensor of the image capturing device may be larger than the image presented by the view finder, such as in an instance in which the image capturing device has a wide field of view or a panoramic field of view.

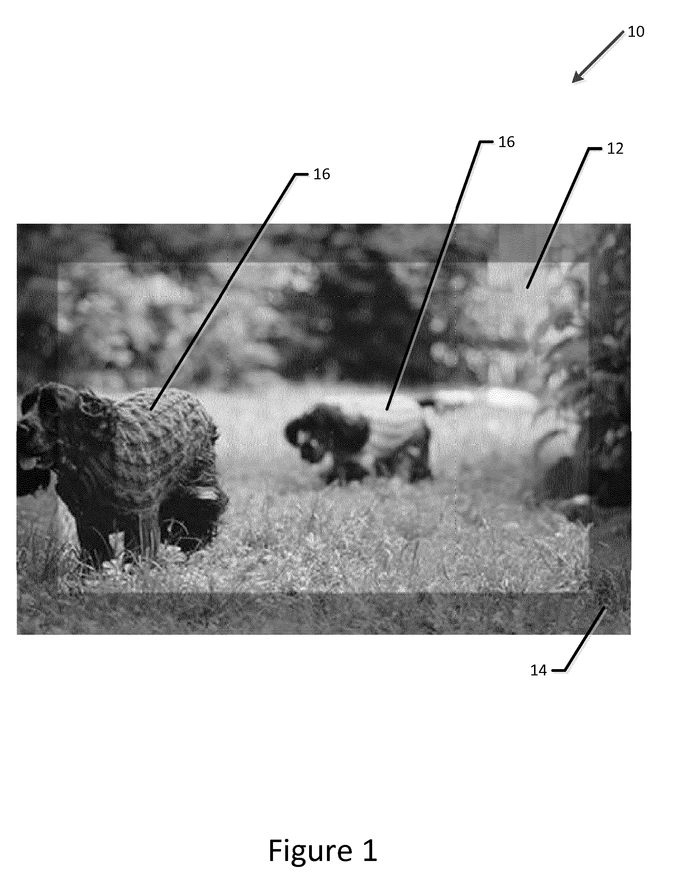

As such, the image obtained by the image capturing device may include both visible content that is presented by the view finder and peripheral content exterior of the visible content, which is not presented by the view finder and which is therefore not capable of being reviewed by the user unless the image is zoomed out. The visible content may be centered within the image obtained by the image capturing device such that the peripheral content forms a frame about the visible content. For example, Figure 1 depicts an image 10 obtained by an image capturing device. The image includes visible content 12 that will be presented by a view finder. In this example, the visible content is centered within the image obtained by the image capturing device. Although the visible content of this example includes the majority of the image obtained by the image capturing device, the image obtained by the image capturing device includes peripheral content 14 exterior to the visible content, that is, closer to the edge or the periphery of the image obtained by the image capturing device than the visible content. Although obtained by the image capturing device, such as by being received by the image sensor of the image capturing device, the peripheral content is not presented by the view finder and, as such, is not viewed by the user and is not included within the image captured by the image capturing device and stored for subsequent review, display, etc.

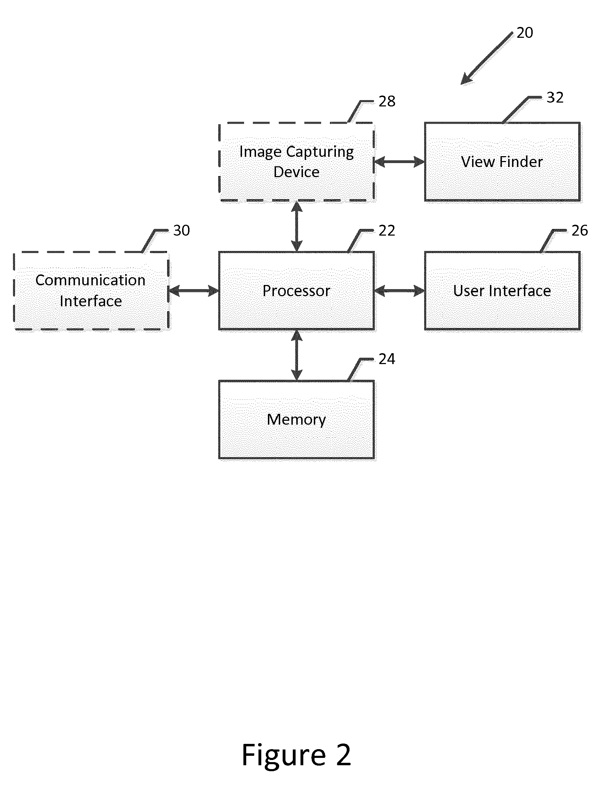

As shown in Figure 2, an apparatus 20 that may be embodied by or otherwise associated with, such as by being in communication with, an image capturing device and that may be configured to define the visible content presented by the view finder in the manner described below is depicted. The apparatus may include or otherwise be in communication with a processor 22, a memory device 24, a user interface 26 and optionally (as represented by the dashed lines in Figure 2) a communication interface 30 and/or an image capturing device 28, e.g., a camera. In some embodiments, the processor (and/or co-processors or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (for example, a computer readable storage medium) comprising gates configured to store data (for example, bits) that may be retrievable by a machine (for example, a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor. Still further, the memory device may store a plurality of images and associated information, e.g., metadata. Alternatively, the images may be stored remotely and accessed by the processor, such as via a communication interface.

As noted above, the apparatus 20 may be embodied by various devices. However, in some embodiments, the apparatus may be embodied as a chip or chip set. In other words, the apparatus may comprise one or more physical packages (for example, chips) including materials, components and/or wires on a structural assembly (for example, a circuit board). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 22 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 22 may be configured to execute instructions stored in the memory device 24 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (for example, the image capturing device) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The apparatus 20 of the illustrated embodiment also includes or is in communication with a user interface 26. The user interface, such as a display, may be in communication with the processor 22 to provide output to the user and, in some embodiments, to receive an indication of a user input, such as in an instance in which the user interface includes a touch screen display. In some embodiments, the user interface may also include a keyboard, a mouse, a joystick, touch areas, soft keys, one or more microphones, a plurality of speakers, or other input/output mechanisms. In an example embodiment, the processor may comprise user interface circuitry configured to control at least some functions of one or more user interface elements such as a display and, in some embodiments, a plurality of speakers, a ringer, one or more microphones and/or the like. The processor and/or user interface circuitry comprising the processor may be configured to control one or more functions of one or more user interface elements through computer program instructions (for example, software and/or firmware) stored on a memory accessible to the processor (for example, memory device 24, and/or the like).

The apparatus 20 of the illustrated embodiment may also optionally include a communication interface 30 that may be any means such as a device or circuitry embodied in either hardware or a combination of hardware and software that is configured to receive and/or transmit data from/to an image capturing device that is remote from the apparatus. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware and/or software for supporting communication via cable, digital subscriber line (DSL), universal serial bus (USB) or other mechanisms.

Although the image capturing device may be remote from the apparatus 20 and in communication therewith via the communications interface 30, the apparatus of some embodiments may include or be associated with an image capturing device 28, such as a camera, a video recorder or the like that is in communication with the processor 22. The image capturing device may be any means for obtaining an image, such as still image, video images or the like, for storage, display or transmission including, for example, an image sensor. For example, the image capturing device may include a digital camera including an image sensor capable of obtaining an image. As such, the image capturing device may include all hardware, such as a lens, an image sensor and/or other optical device(s), and software necessary for capturing an image. Alternatively, the image capturing device may include only the hardware needed to view an image, while the memory stores instructions for execution by the processor in the form of software necessary to capture, store and process an image. In an example embodiment, the image capturing device may further include a processing element such as a co-processor which assists the processor in processing image data and an encoder and/or decoder for compressing and/or decompressing image data. The encoder and/or decoder may encode and/or decode according to a predefined format, such as a JPEG standard format. The image that is captured may be stored for future viewings and/or manipulations in the memory of the apparatus and/or in a memory external to the apparatus. The image capturing device may also include or otherwise be associated with, e.g., in communication with, a view finder 32 for presenting at least a portion of the image obtained by the image capturing device.

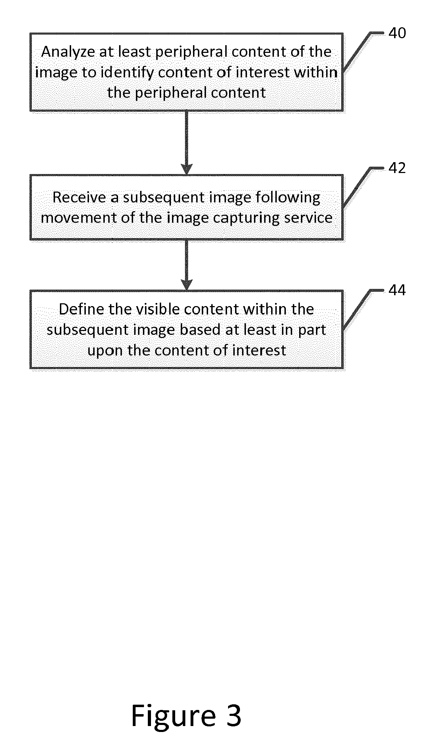

As shown in Figure 3, the operations performed, such as by the apparatus 20 of Figure 2, in order to define the visible content presented by the view finder 32 from among the image obtained by an image capturing device 28 is depicted. As shown in block 40, the apparatus may include means, such as the processor 22 or the like, for analyzing an image obtained by an image capturing device. In this regard, the apparatus, such as the processor, is configured to analyze at least the peripheral content exterior of the visible content presented by the view finder of or otherwise associated with the image capturing device. In other words, the apparatus, such as the processor, is configured to analyze at least that content of the image obtained by the image capturing device that is not visible within the image presented by the view finder. In at least some embodiments, the apparatus, such as the processor, may be configured to analyze not only the peripheral content exterior of the visible content, but also the visible content presented by the view finder, such that the processor of an example embodiment may analyze the entire image obtained by the image capturing device.

The apparatus 20, such as the processor 22, may be configured to analyze the image to identify content of interest within the peripheral content. Content of interest may be defined in various manners. For example, content of interest may be defined to be content that is in motion, such as may be determined from a comparison of images obtained by the image capturing device 28 at different points in time. Additionally or alternatively, content of interest may be defined to be people, such as any person or one or more particular people, that may be identified, such as by image recognition techniques. Additionally or alternatively, the content of interest may be particular locations, such as buildings, points of interest or the like. While several examples of content of interest are provided herein, the content of interest may be defined in any of a variety of different manners.

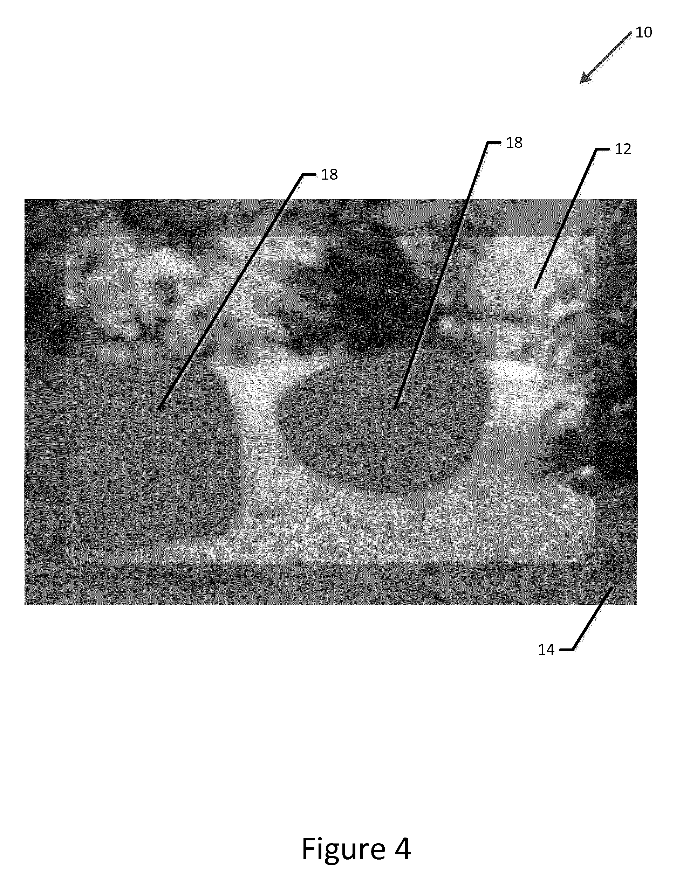

In an example embodiment, the apparatus 20, such as the processor 22, is configured to identify content of interest in the peripheral content of an image obtained by an image capturing device 28 with the content of interest defined to be an object that is in motion. With reference to Figure 1, the two dogs 16 are in motion, as could be determined by comparison of the image 10 of Figure 1 with a prior image of the same scene. As such, the apparatus, such as the processor, of this example embodiment may analyze the image of Figure 1 and identify the representations of the two dogs to be content of interest, such as shown in Figure 4 in which the content of interest is replaced with a corresponding shape or region 18.

As shown in block 42 of Figure 3, the apparatus 20 may also include means, such as the processor 22, the communication interface 30 or the like, for receiving a subsequent image following movement of the image capturing device 28 in a first direction, such as from left to right, right to left, down to up, up to down or any of a myriad of other directions. The apparatus, such as the processor, may receive the subsequent image that has been obtained by the image capturing device following movement of the image capturing device in the first direction directly from the image capturing device or indirectly via one or more intermediary device(s). In the example embodiment, the apparatus, such as the processor, the communication interface or the like, may also be configured to receive an indication of the first direction in which the image capturing device has moved. In this regard, the image capturing device may provide information regarding the first direction. In an example embodiment, the information regarding the first direction in which the image capturing device has moved may be provided in terms of the direction in which the image capturing device was directed at the time each image was obtained by the image capturing device. In this example embodiment, the apparatus, such as the processor, may be configured to determine the first direction by comparing the directions in which the image capturing device was directed at the respective times at which the prior image that was analyzed to identify content of interest was obtained and at the time that the subsequent image received from the image capturing device was obtained. In this example embodiment, the apparatus, such as the processor, may compare the respective directions to determine the change therebetween which, in turn, defines the first direction in which the image capturing device moved prior to obtaining the subsequent image that has now been received by the apparatus.

As shown in block 44, the apparatus 20 may include means, such as the processor 22 or the like, for defining the visible content within the subsequent image based at least in part upon the content of interest identified within the peripheral content of the prior image. In this regard, the apparatus, such as the processor, may be configured to define the visible content presented by the view finder 32 and, as a result, the content of the resulting image that is captured in a manner such that the visible content is not centered within the subsequent image. Instead, the visible content may be defined in a manner so as to include more of the content of the interest that was identified within the peripheral content of a prior image than would otherwise be included within the visible content if the visible content had remained centered within the subsequent image. As such, the resulting visible content presented by the view finder may be of greater interest or of more relevance to the user by including a greater amount of the content of interest than would otherwise be provided by centering the visible content within the subsequent image.

In order to define the visible content within the subsequent image, the apparatus 20 of an example embodiment may include means, such as the processor 22 or the like, for moving the visible content relative to the respective image in a disproportionate manner relative to the movement from the prior image (the peripheral content of which was analyzed to identify the content of interest) to the subsequent image attributable to movement of the image capturing device 28. For example, in an instance in which the content of interest is positioned in the first direction relative to the visible content of the prior image, the apparatus, such as the processor, may be configured to move the visible content relative to the respective image to a greater degree than the movement from the prior image to the subsequent image attributable to movement of the image capturing device, thereby effectively exaggerating the movement of the image capturing device. Conversely, in an instance in which the content of interest is positioned in a direction, opposite the first direction, relative to the visible content of the prior image, the apparatus, such as the processor, may be configured to move the visible content relative to the respective image to a lesser degree than the movement from the prior image to the subsequent image attributable to movement of the image capturing device.

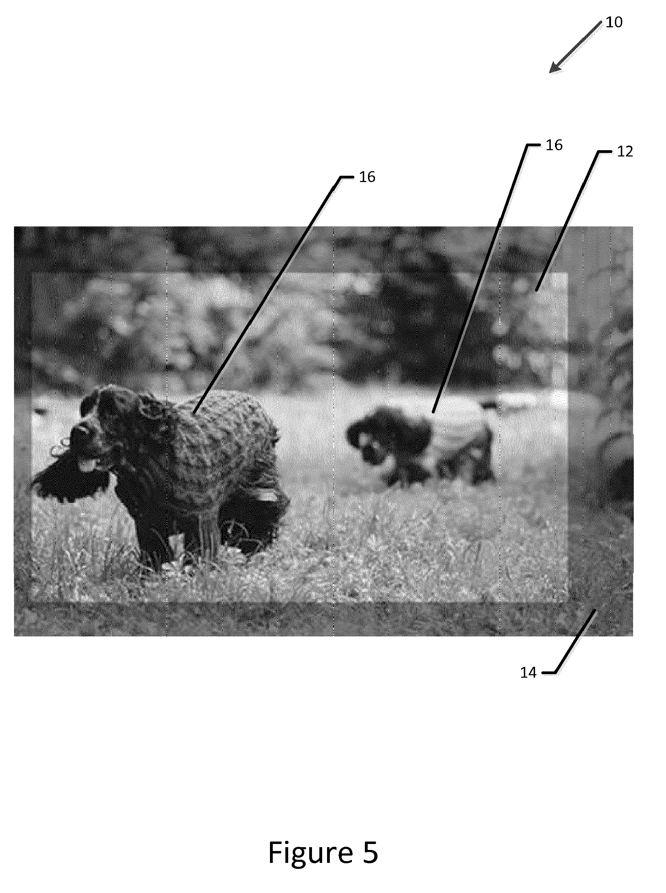

By way of example in which the image 10 of Figure 1 is considered the prior image and the representations of the two dogs 16 are identified as content of interest 18 within the peripheral content 14 as shown in Figure 4, Figure 5 depicts a subsequent image obtained by the image capturing device following movement of the image capturing device in a first direction. In this example, the first direction is a leftwardly direction extending from the right to the left of the image.

As shown in Figure 4, content of interest has been identified within the peripheral content 14 of the prior image to the left of the visible content 12, that is in the first direction relative to the visible content. As such, the apparatus 20, such as the processor 22, of this example embodiment is configured to move the visible content relative to the subsequent image obtained by the image capturing device 28 in a disproportionate amount and, more particularly, to a greater degree than the movement from the prior image to the subsequent image that is attributable to the movement of the image capturing device. In other words, while the subsequent image of Figure 5 obtained by the image capturing device moves somewhat to the left as a result of the movement of the image capturing device in the first direction prior to capturing the subsequent image, the visible content that is defined within the subsequent image is moved to a greater degree to the left, that is, in the first direction, as a result of content of interest having been identified within the peripheral content to the left of the visible content of the prior image. As shown in Figure 5, as a result of the movement of the visible content to a greater degree than the movement of the overall image, the visible content is no longer centered within the subsequent image obtained by the image capturing device, but is offset toward the left such that there is less peripheral content to the left of the visible image than to the right of the visible image. However, the visible content defined within the subsequent image obtained by the image capturing device includes a greater amount of the content of interest that was identified within the peripheral content of the prior image, such as by including the entire representations 16 of both dogs, than would have been included if the visible content was simply centered within the subsequent image obtained by the image capturing device. Indeed, if the visible content were centered within the subsequent image, the leftmost portion of the larger dog would have been outside of the visible content and within the peripheral content so as not to be presented within the view finder 32.

While the foregoing example describes an instance in which the content of interest is located in the same direction relative to the visible content of the prior image as the first direction in which the image capturing device 28 has moved, the content of interest may, instead, be in the direction opposite from the first direction in which the image capturing device moves. For example, the content of interest may be identified in the peripheral content of the right of the visible content, but the first direction may be towards the left. In this instance, the apparatus 20, such as the processor 22, may be configured to define the visible content within the subsequent image such that the visible content is not moved in the first direction to as great a degree as the subsequent such that the visible content is effectively shifted to the right relative to the subsequent image obtained by the image capturing device so as to include additional portions of the content of interest. Thus, the peripheral content to the right of the visible image would be less than to the left of the visible image in this example.

In some instances, content of interest may be identified within the peripheral content 14 that is positioned relative to the visible content in both the same direction in which the image capturing device 28 is moved as well as in the opposite direction to that in which the image capturing device moved, such as in an instance in which content of interest is identified both within the peripheral content to the left and to the right of the visible content of the prior image with the image capturing device being moved in a first leftwardly direction prior to obtaining the subsequent image. In these instances, the apparatus 20, such as the processor 22, may be configured to cause the visible content to remain centered within the image captured by the image capturing device so as not to be shifted offcenter, thereby not favoring or disfavoring the content of interest on either side of the visible content. Alternatively, the apparatus, such as the processor, may be configured to determine the location relative to the visible content of the prior image at which the majority of the content of interest is positioned and to then define the visible content within the subsequent image based upon the position of the majority of the content of interest, thereby favoring the inclusion of a majority of the content of interest on one side of the visible content of the prior image and disfavoring the inclusion of the minority of the content of interest on the opposite side of the visible content of the prior image.

While the foregoing examples have been in terms of content of interest identified within the peripheral content of a prior image to the left and right of the visible content, and movement of the image capturing device to the left or right, the content of interest may similarly be identified above or below or any other position relative to the visible content and the first direction in which the image capturing device is moved prior to obtaining the subsequent image may similarly be in an upwardly or downwardly direction or in any other direction. As such, the apparatus 20, such as the processor 22, of this example embodiment may similarly be configured to define the visible content within the subsequent image based upon the positional relationship of the content of interest within the peripheral content of the prior image relative to the first direction in which the image capturing device is moved in the same manner as described above.

In instances in which the content of interest is identified within the peripheral content of a prior image obtained by the image capturing device 28 with the content of interest being in a direction relative to the visible content of the prior image that is not in the same first direction in which the image capturing device is moved prior to obtaining the subsequent image and similarly is not opposite the first direction in which the image capturing device is moved prior to obtaining the subsequent image, the apparatus 20, such as the processor 22, may be configured to permit the visible content presented by a view finder 32 to remain centered within the image obtained by the image capturing device and to not move the visible content in any disproportionate manner relative to the movement of the prior image to the subsequent image. For example, in an instance in which the content of interest is identified within the peripheral content that lies above or below the visible content of a prior image and in which the image capturing device is moved to the left or to the right prior to obtaining the subsequent image, the apparatus, such as the processor, may be configured to determine that the content of interest is positioned in a direction orthogonal to or otherwise different than the first direction in which the image capturing device is moved prior to obtaining the subsequent image. As such, the apparatus, such as the processor, of this example embodiment may cause the visible content to remain centered within the subsequent image obtained by the image capturing device.

Further, in an instance in which the visible content has previously been moved relative to a respective image in a disproportionate manner based upon the relative position of content of interest to the visible content of a prior image obtained by the image capturing device 28, a subsequent image obtained by the image capturing device may no longer include content of interest in either the first direction in which the image capturing device is moved prior to obtaining the subsequent image or in a direction opposite the first direction. Thus, the apparatus 20, such as the processor 22, of an example embodiment may be configured to cause the visible content prevented by the view finder 32 to be recentered within a subsequent image obtained by the image capturing device so as to no longer be offset in one direction or the other relative to the center of the image obtained by the image capturing device.

In an example embodiment, the apparatus 20, such as the processor 22, may be configured to provide optical image stabilization. Optical image stabilization is configured to maintain the stability of an image or to increase the stability of an image through mechanical movement of a lens element, such as a lens element of the image capturing device 28. In this example embodiment, the definition of the visible content within a subsequent image based upon content of interest identified within the peripheral content of a prior image may be combined with and collaborate with the optical image stabilization in order to further improve the stability of the image presented by the view finder 32.

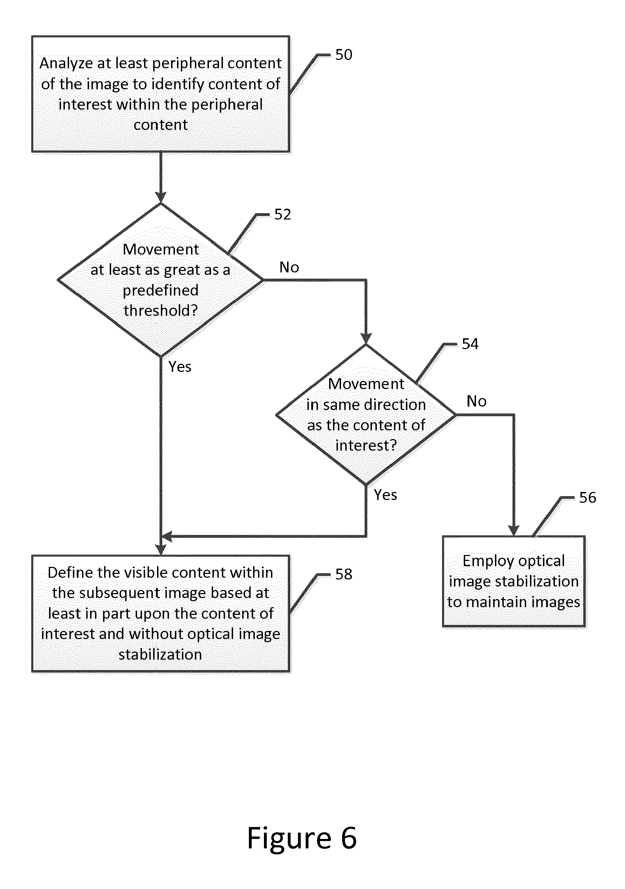

As shown in block 50 of Figure 6, the apparatus 20 of this example embodiment may include means, such as the processor 22 or the like, for analyzing an image obtained by the image capturing device 28. In this regard, the apparatus, such as the processor, may be configured to analyze at least the peripheral content exterior of the visible content so as to identify content of interest within the peripheral content. In some example embodiments, the apparatus, such as the processor, may be configured to analyze both the visible content presented by a view finder 32 associated with the image capturing device and peripheral content exterior of the visible content to identify content of interest within the peripheral content.

As shown in block 52 and in response to movement of the image capturing device 28, such as in a first direction, the apparatus 20 may include means, such as the processor 22 or the like, for determining whether the movement of the image capturing device satisfies a predefined threshold, such as by being at least as great as the predefined threshold. In an instance in which the movement of the image capturing device satisfies the predefined threshold, the apparatus may include means, such as the processor or the like, for defining the visible content within the subsequent image based at least in part upon the content of interest in the manner described above and without employing optical image stabilization. See block 58 of Figure 6. Thus, in response to larger movements of the image capturing device between obtaining the prior image and the subsequent image, the optical image stabilization may be deactivated to permit the apparatus of an example embodiment to define the visible content within the subsequent image in a manner that is based upon the content of interest that has been identified in the prior image.

Alternatively, in an instance in which the movement of the image capturing device 28 between obtaining the prior image and obtaining the subsequent image fails to satisfy the predefined threshold, such as by being no greater than the predefined threshold, the apparatus 28 of this example embodiment may include means, such as the processor 22 or the like, for determining whether the movement is in the same direction as that in which the content of interest is positioned relative to the visible content of the prior image. See block 54. In an instance in which the movement of the image capturing device is in the same direction as that in which the content of interest is positioned relative to the visible content of the prior image, the apparatus, such as the processor, may define the visible content within the subsequent image based at least in part upon the content of interest as described above and without optical image stabilization. See block 58. However, in an instance in which the movement is not in the same direction as that in which the content of interest is positioned relative to the visible content of the prior image, the apparatus, such as the processor or the like, may cause optical image stabilization to the be employed in order to maintain the stability of the image. See block 56.

Thus, in an instance in which the movement of the image capturing device 28 is relatively small and is in a direction different than that in which the content of interest is positioned relative to the visible content of the prior image, optical image stabilization may be employed to maintain the stability of the image without also endeavoring to reposition the visible content within the subsequent image. However, in instances in which the movement of the image capturing device is greater or even in instances in which the movement of the image capturing device is smaller, but is in the same direction as that in which the content of interest is positioned relative to the visible content of the prior image, optical image stabilization may be deactivated so as to permit the apparatus to define the visible content within the subsequent image based upon the relative position of the content of interest to the visible content of the prior image. Thus, by coordinating optical image stabilization and the repositioning of visible content within a subsequent image obtained by an image capturing device, the overall stability of the image may be enhanced while still judiciously defining the content of interest so as to include additional portions of the content of interest relative to that which would be included if the visible content were merely centered within the subsequent image obtained by the image capturing device.

As described above, the method, apparatus 20 and computer program product define the content that is to be visible within a view finder 32 and, consequently, within the resulting image that is captured based at least in part upon content of interest within peripheral content of a prior image that is obtained by an image capturing device 28 but that is not presented by a view finder. By defining the visible content based at least in part upon the content of interest and not by merely centering the visible content within the image obtained by an image capturing device, the resulting image may include more of the content of interest that lies within the image obtained by the image capturing device including the content of interest along the edges of the image. Thus, the resulting image presented by the view finder may be more informative and of greater interest to a user than an image of the same scene in which the visible content is merely centered within the image obtained by the image capturing device without regard to content of interest that appears within peripheral content of a prior image.

As described above, Figures 3 and 6 are flowcharts of an apparatus 20, method and computer program product according to example embodiments of the invention. It will be understood that each block of the flowcharts, and combinations of blocks in the flowcharts, may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 24 of an apparatus employing an embodiment of the present invention and executed by a processor 22 of the apparatus. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
analyzing an image obtained by an image capturing device, wherein analyzing the image comprises analyzing at least peripheral content exterior of visible content presented by a viewfinder to identify content of interest within the peripheral content;
following movement of the image capturing device in a first direction, receiving a subsequent image; and
defining the visible content within the subsequent image based at least in part upon the content of interest identified within the peripheral content such that the visible content is not centered within the subsequent image.

2. A method according to Claim 1 wherein defining the visible content within the subsequent image comprises moving the visible content relative to the respective image in a disproportionate manner relative to movement from the image to the subsequent image attributable to movement of the image capturing device.

3. A method according to Claim 2 wherein the content of interest is positioned in the first direction relative to the visible content of the image, and wherein moving the visible content relative to the respective image in a disproportionate manner comprises moving the visible content relative to the respective image to a greater degree than the movement from the image to the subsequent image.

4. A method according to Claim 2 wherein the content of interest is positioned in a direction, opposite the first direction, relative to the visible content of the image, and wherein moving the visible content relative to the respective image in a disproportionate manner comprises moving the visible content relative to the respective image to a lesser degree than the movement from the image to the subsequent image.

5. A method according to any one of Claims 1 to 4 wherein defining the visible content within the subsequent image comprises defining the visible content within the subsequent image such that the visible content includes more of the content of interest than would be included if the visible content were centered within the subsequent image.

6. A method according to any one of Claims 1 to 5 further comprising employing optical image stabilization in an instance in which the content of interest is in a direction, opposite the first direction, relative to the visible content of the image, so as to maintain the image, wherein defining the visible content within the subsequent image is without optical image stabilization in an instance in which the content of interest is in the first direction, relative to the visible content of the image.

7. A method according to any one of Claims 1 to 6 further comprising redefining the visible content to be centered within another image in an instance in which content of interest has not been identified and in response to further movement of the image capturing device so as to capture the another image.

8. A computer program product comprising at least one computer-readable storage medium having computer-executable program code instructions stored therein, the computer-executable program code instructions comprising program code instructions, when executed by at least one processor, to cause the method of any one of Claims 1 to 7 to be performed.

9. An apparatus comprising:
means for analyzing an image obtained by an image capturing device, wherein means for analyzing the image comprises means for analyzing at least peripheral content exterior of visible content presented by a viewfinder to identify content of interest within the peripheral content;
means, following movement of the image capturing device in a first direction, for receiving a subsequent image; and
means for defining the visible content within the subsequent image based at least in part upon the content of interest identified within the peripheral content such that the visible content is not centered within the subsequent image.

10. An apparatus according to Claim 9 wherein the means for defining the visible content within the subsequent image comprise means for moving the visible content relative to the respective image in a disproportionate manner relative to movement from the image to the subsequent image attributable to movement of the image capturing device.

11. An apparatus according to Claim 10 wherein the content of interest is positioned in the first direction relative to the visible content of the image, and wherein the means for moving the visible content relative to the respective image in a disproportionate manner comprises means for moving the visible content relative to the respective image to a greater degree than the movement from the image to the subsequent image.

12. An apparatus according to Claim 10 wherein the content of interest is positioned in a direction, opposite the first direction, relative to the visible content of the image, and wherein the means for moving the visible content relative to the respective image in a disproportionate manner comprises means for moving the visible content relative to the respective image to a lesser degree than the movement from the image to the subsequent image.

13. An apparatus according to any one of Claims 9 to 12 wherein the means for defining the visible content within the subsequent image comprises means for defining the visible content such that the visible content within the subsequent image includes more of the content of interest than would be included if the visible content were centered within the subsequent image.

14. An apparatus according to any one of Claims 9 to 13 further comprising means for employing optical image stabilization in an instance in which the content of interest is in a direction, opposite the first direction, relative to the visible content of the image, so as to maintain the image, wherein the means for defining the visible content within the subsequent image is without optical image stabilization in an instance in which the content of interest is in the first direction, relative to the visible content of the image.

15. An apparatus according to any one of Claims 9 to 14 further comprising means for redefining the visible content to be centered within another image in an instance in which content of interest has not been identified and in response to further movement of the image capturing device so as to capture the another image.
